# EUROPÄISCHE PATENTSCHRIFT

(11) **EP 2 181 892 B1**
(45) Veröffentlichungstag und Bekanntmachung des Hinweises auf die Patenterteilung: **14.12.2011**
(21) Anmeldenummer: 09013564.1
(22) Anmeldetag: 28.10.2009
(51) Int. Cl.: B60R 1/00, B60Q 1/48, B62D 15/02

(54) **Parkassistenzsystem und Verfahren zum Betreiben eines Parkassistenzsystems für ein Kraftfahrzeug**
Parking assistance system and method for operating a parking assistance system for a motor vehicle
Système d'assistance au stationnement et procédé de fonctionnement d'un système d'assistance au stationnement pour un véhicule automobile

(30) Priorität: 28.10.2008 DE 102008053497; 23.03.2009 DE 102009014022
(43) Veröffentlichungstag der Anmeldung: 05.05.2010
(73) Patentinhaber: Volkswagen AG, 38436 Wolfsburg (DE)
(72) Erfinder: Schmidtke, Stefan, 38442 Wolfsburg (DE); Lambert, Georg, Dr., 38442 Wolfsburg (DE); Wild, Holger, 12453 Berlin (DE); Schönig, Jürgen, 13187 Berlin (DE)
(74) Vertreter: Obst, Bernhard

(56) Entgegenhaltungen:
- EP-A1- 1 731 366
- EP-A1- 1 760 489
- EP-A2- 1 923 778

## Beschreibung

Die Erfindung betrifft ein Parkassistenzsystem nach dem Oberbegriff des Patentanspruchs 1 sowie ein Verfahren zum Betreiben eines solchen Systems gemäß dem Oberbegriff des Patentanspruchs 9.

Aus dem Stand der Technik ist es bekannt, Fahrer von Kraftfahrzeugen beim Einparken durch technische Hilfsmittel, welche als Parkassistenzsysteme bezeichnet werden, zu unterstützen. Einfache Systeme umfassen beispielsweise Ultraschallsensoren, die beispielsweise in die Stoßfänger des Kraftfahrzeugs integriert sind. Diese senden Ultraschallsignale aus und messen eine Laufzeit reflektierter Signale. Anhand der Laufzeit wird eine Entfernung zu einem Objekt in der Umgebung des Kraftfahrzeugs ermittelt. Der Fahrer wird nun dadurch unterstützt, dass ihm diese Abstandsinformation zugänglich gemacht wird. Bei einfachen Systemen wird ein akustisches Signal ausgegeben, wenn einer der Messsensoren einen Abstand zu einem Objekt erfasst, der einen Schwellenwert unterschreitet. Beispielsweise wird ein unterbrochenes Tonsignal ausgegeben. Je geringer der detektierte Abstand ist, desto kürzer werden die Unterbrechungen. Wird ein Unterschreiten eines vorgegebenen Sicherheitsabstands zu einem Objekt in der Umgebung detektiert, so wird ein Dauertonsignal ausgegeben. Andere einfache optische Systeme nutzen beispielsweise mehrere Leuchtelemente, wobei ein erfasster minimaler Abstand von einem Objekt beispielsweise über eine Anzahl der zeitgleich leuchtenden Leuchtelemente angezeigt wird. Dem Fachmann sind eine Vielzahl solcher Systeme und Ausführungsformen aus dem Stand der Technik bekannt.

Höher entwickelte Systeme nutzen zusätzlich Bilderfassungseinrichtungen, vorzugsweise Videokameras, die eine Umgebung des Kraftfahrzeugs erfassen. Die durch die Bilderfassungseinheit erfasste Ansicht der Umgebung wird dann beispielsweise dem Fahrer auf einer Anzeigevorrichtung im Innenraum des Kraftfahrzeugs dargestellt. Aus der DE 197 41 896 A1 ist ein solches Assistenzsystem bekannt. Darin ist eine Vorrichtung zur bildlichen Darstellung von Bereichen der Umgebung eines Kraftfahrzeugs in einem sich im Innenraum des Kraftfahrzeugs befindlichen Sichtbereich eines Fahrers bekannt, wobei die Vorrichtung mindestens einen Bildschirm umfasst, auf dem sensorisch erfasste und elektronisch bearbeitete Bildinformationen dargestellt werden und wobei zur elektronischen Bearbeitung der sensorisch erfassten Bildinformationen eine Steuereinheit vorgesehen ist. Diese ist in der Lage, anhand der erfassten Bildinformationen unterschiedliche bildliche Darstellungen zu erzeugen und in Abhängigkeit von Betriebskennwerten eine optimale Darstellung auszuwählen. Beschrieben ist eine Ausführungsform, bei der ein Innenspiegel als Bildschirm ausgebildet ist, auf dem ein reales Bild einer Kamera dargestellt wird, welches die Umgebung des Kraftfahrzeugs im rückwärtigen Raum erfasst. Zusätzlich kann auf einer weiteren Anzeigevorrichtung im Armaturenbrett eine synthetisch erzeugte Draufsicht angezeigt werden, die Umrisse von erfassten Objekten in der Umgebung hinter dem Kraftfahrzeug darstellen. Zusätzlich Ist als Zahlenwert ein minimaler Abstand zu einem Objekt angegeben.

Aus der DE 10 2005 015 088 A1 ein ähnliches System bekannt. Das beschriebene System umfasst eine Hinderniserfassungseinheit zum Erfassen des Vorliegens eines Hindernisses einer Umgebung des Kraftfahrzeugs. Ferner ist eine Bildgebungseinheit zum Empfangen eines Bildes der Umgebung des Kraftfahrzeugs vorgesehen. Das beschriebene Fahrzeugumgebungsüberwachungssystem ist so ausgebildet, dass es für erkannte Hindernisse deren Höhe bestimmt. Liegt eine Höhe unterhalb einer vorgegebenen Höhe, so wird ein solches Hindernis als sicheres Hindernis betrachtet, welches überfahren werden kann. Eine Höhenermittlung wird anhand eines Bildverarbeitungsvorgangs ausgeführt. Das Fahrzeugumgebungsüberwachungssystem ist so ausgebildet, dass es anhand des empfangenen Bildes der Umgebung eine Draufsicht der Umgebung erzeugen kann und in dieser die Objekte entsprechend als sichere (überfahrbare) oder gefährliche Hindernisse darstellt. Zusätzlich ist gezeigt, dass Abstandslinien parallel zu einer Hinterkante des Kraftfahrzeugs in vorgegebenen Abständen darstellbar sind.

Aus der EP 1 725 035 B1 sind eine Bildanzeigevorrichtung und ein Verfahren zum Unterstützen des Einparkens beschrieben, die es einem Fahrer gestatten, den Zustand einer Umgebung des Fahrzeugs korrekt auf einfache Weise wahrzunehmen, auch wenn mehrere Kameras vorhanden sind. Mehrere Abbildungen, die unterschiedliche Richtungen der Umgebung des Kraftfahrzeugs zeigen, werden mittels der mehreren Kameras erfasst. Diese Ansichten werden verwendet, um den Zustand der Umgebung des Fahrzeugs für den Fahrer darzustellen. Vorzugsweise erfolgt die Darstellung in Form einer Draufsicht, welche im Englischen auch als Bird's-Eye View bezeichnet wird. Vorzugsweise ist die Anzeigevorrichtung, auf der die Darstellung der Draufsicht erfolgt, als Touchscreen ausgebildet. Durch eine Berührung eines bestimmten Bereichs der Umgebung des Kraftfahrzeugs ist es für den Fahrer möglich, eine Darstellung der Ansicht auszuwählen, die den Bereich darstellt, den er auf der Anzeigefläche berührt hat. Somit erfolgt eine Umschaltung von der Draufsicht, welche aus den mehreren Kameraansichten errechnet ist, auf eine reale Ansicht einer Kamera.

Aus der EP1 923 778A2 sind ein mobiler Bildschirm und ein Anzeigeverfahren bekannt, die beispielsweise für Fahrzeugsatellitennavigationssysteme verwendet werden können. Auf der Anzeigefläche sind eine Schnittstelenregion für eine Nutzerbedienung und eine Informationsregion vorhanden. Über eine Nutzerauswahl können die Darstellungspositionen der Schnittstelenregion und der Informationsregion verändert werden.

Die DE 100 08 454 A1 beschreibt ein multifunktionales Navigationsgerät, bei dem eine Positionsbestimmungseinheit, die eine GPS-Empfänger sein kann, und eine mobile Datenverarbeitungseinheit in einem Gehäuserahmen mit Kopplungsmitteln angeordnet sind, die für eine Kopplung der Positionsbestimmungseinheit und der mobilen Datenverarbeitungseinheit vorgesehen sind. GPS ist die Abkürzung für Global Positioning System, welches eine Satellitengestütztes Navigationssystem ist.

Aus der gattungsbildenden EP 1 731 366 A1 sind ein Verfahren und eine Vorrichtung bekannt, bei denen neben einer Vogelperspektivansicht eine mit einer Kamera aufgenommene direkte Ansicht dargestellt wird, um einen tatsächlichen relativen Abstand von einem Hindernis korrekt abschätzen zu können. In der Vogelperspektivansicht und der direkten Ansicht sind Einblendungen vorgesehen, um auf mögliche Kollisionshindernisse aufmerksam zu machen.

Aus der EP 1 760 489 A1 ist eine Vorrichtung zur Abstandsermittlung beschrieben, bei der eine Umgebung eines Fahrzeugs mittels mehrerer fotografischer Mittel erfasst wird. Durch Auswertung mindestens zweier fotografischer Abbildungen von ein und demselben Hindernis in der Umgebung des Fahrzeugs wird dessen Abstand ermittelt. Hierbei werden unterschiedliche Auswerteverfahren angewendet, um eine Hinderniserkennungsgenauigkeit zu steigern. Die Vorrichtung ist in einer Ausführungsform ausgebildet, einen Alarm auszugeben, wenn ein Hindernis erfasst ist, welches sich dem Fahrzeug oder welchem sich das Fahrzeug nähert.

Zwar sind aus dem Stand der Technik eine Vielzahl von Parkassistenzsystemen und Verfahren zum Betreiben solcher Systeme bekannt, jedoch besteht weiter das Bedürfnis, diese Systeme hinsichtlich einer optimalen Informationsvermittlung an den Fahrer und einer vereinfachten Bedienbarkeit zu verbessern.

Der Erfindung liegt somit das technische Problem zugrunde, ein Parkassistenzsystem für ein Kraftfahrzeug sowie ein Verfahren zum Betreiben eines solchen zu schaffen, welche eine verbesserte Informationsvermittlung und vereinfachte Bedienung des Parkassistenzsystems gestatten.

Das technische Problem wird durch ein Parkassistenzsystem mit den Merkmalen des Patentanspruchs 1 sowie ein Verfahren mit den Merkmalen des Patentanspruchs 9 erfindungsgemäß gelöst. Vorteilhafte Ausgestaltungen der Erfindung ergeben sich aus den Unteransprüchen.

Vorgeschlagen wird ein Parkassistenzsystem für ein Kraftfahrzeug, umfassend mehrere Bilderfassungseinheiten zum Erfassen der Umgebung des Kraftfahrzeugs, eine Anzeigevorrichtung zum Darstellen einer Draufsicht auf das Kraftfahrzeug und seine Umgebung, die aus den erfassten Ansichten der mehreren Bilderfassungseinheiten abgeleitet ist, mehrere Abstandssensoren zum Erfassen von Abständen von Objekten in der Umgebung des Kraftfahrzeugs, wobei vorgesehen ist, für jeden ermittelten Abstand, der kleiner als ein Schwellenabstand ist, ein Linienelement, beispielsweise ein Kreissektorelement, in der Draufsicht grafisch darzustellen, wobei eine grafische Entfernung des jeweiligen Linienelements von einer Kontur des Kraftfahrzeugs ein Maß für die Entfernung des ermittelten Objekts von dem Kraftfahrzeug ist. Ferner wird ein Verfahren zum Betreiben eines Parkassistenzsystems für ein Kraftfahrzeug vorgeschlagen, welches die Schritte umfasst: Erfassen mehrerer Ansichten der Umgebung des Kraftfahrzeugs mittels mehrerer Bilderfassungseinheiten, Ableiten einer Draufsicht auf das Kraftfahrzeug und seine Umgebung aus den erfassten Ansichten der mehreren Bilderfassungseinheiten, Darstellen der Draufsicht auf einer Anzeigevorrichtung, Erfassen von Abständen von Objekten in der Umgebung des Kraftfahrzeugs mittels mehrerer Abstandssensoren, wobei für jeden ermittelten Abstand, der kleiner als ein Schwellenabstand ist, ein Linienelement, beispielsweise ein Kreissektorelement, in der Draufsicht grafisch dargestellt wird, wobei eine grafische Entfernung des jeweiligen Linienelements von einer Kontur des Kraftfahrzeugs ein Maß für die Entfernung des ermittelten Objekts von dem Kraftfahrzeug ist. Unter einer grafischen Entfernung wird die Entfernung in der grafischen Darstellung verstanden. Die Erfindung bietet den Vorteil, dass für jeden Messsensor bzw. für jeden individuell ermittelten Abstand ein eigenständiges Linienelement in der grafischen Draufsicht dargestellt wird. Dies ist insbesondere dann von Vorteil, wenn beim Einparken des Fahrzeugs dicht an Hindernissen vorbeigefahren werden muss, die sich im Nahbereich, d.h. in einem Abstand unter dem Schwellenabstand, befinden. Befindet sich dieses Objekt beispielsweise quer ab vom Kraftfahrzeug, so ist bei einer Rückwärtsfahrbewegung der Abstand von diesem Hindernis von geringerem Interesse als ein Abstand von weiteren Objekten im rückwärtigen Umgebungsraum. Dadurch, dass für die einzelnen Messsensoren bzw. die einzelnen ermittelten Abstände jeweils einzelne Linienelemente in der Draufsicht angezeigt werden, wird dem Fahrer ein höherer Informationsgehalt zur Verfügung gestellt.

Bei einer bevorzugten Weiterbildung der Erfindung ist vorgesehen, dass über eine Länge des Linienelements bzw. dessen Ausgestaltung, beispielsweise als Kreissektor, jeweils ein Messbereich des entsprechenden Abstandsensors angedeutet wird. Hierüber wird dem Fahrer die Information vermittelt, in welchem Bereich der Umgebung sich ein Objekt befinden kann. Anhand mehrerer Linienelemente kann darüber hinaus auch eine Ausdehnung eines Objekts abgeschätzt werden.

Bei einer Ausführungsform der Erfindung ist vorgesehen, dass die Linienelemente jeweils in der Draufsicht so dargestellt werden, dass die grafische Entfernung des Linienelements von der Kontur des Kraftfahrzeuges einem Abstand des entsprechenden Objekts von dem Fahrzeug abzüglich eines Sicherheitsabstands entspricht. Dies bedeutet, dass das entsprechende Linienelement in der grafischen Ansicht nicht an der Position angezeigt wird, an der sich das Hindernis befindet, sondern bezogen auf die Kontur des Kraftfahrzeugs so dargestellt wird, dass der Abstand um einen Sicherheitsabstand verringert ist, d.h. dass das Linienelement jeweils den Sicherheitsabstand zu dem Objekt einhält, den das Fahrzeug nicht unterschreiten sollte. Hierdurch wird dem Fahrer eine grafische Information vermittelt, die ihm eine Verkehrsfläche anzeigt, nämlich ein Gebiet oder die Entfernung von der Kraftfahrzeugkontur zu dem Linienelement, über welche der Fahrer das Fahrzeug bewegen kann, ohne in den Sicherheitsabstand um das Objekt einzudringen.

Als besonders vorteilhaft hat es sich erwiesen, die Linionelemente entsprechend ihrer zugeordneten Abstände der jeweiligen Objekte von dem Kraftfahrzeug zu klassifizieren und die Klassifizierung mittels eines Darstellungsattributs, beispielsweise einer Linienart, einer Farbe, einer Darstellungsart usw. anzuzeigen. Als verschiedene Linienarten können beispielsweise eine durchgezogene Linie, eine gepunktete Linie, eine gestrichpunktete Linie, eine gezackte Linie, eine geschlängelte Linie usw. verwendet werden. Das Darstellungsattribut Darstellungsart umfasst beispielsweise eine kontinuierliche Darstellung oder eine blinkende Darstellung. Ein weiteres Darstellungsattribut ist beispielsweise eine Transparenz, die die Linie aufweist. So kann beispielsweise das Linienelement, welches zu einem großen Abstand korrespondiert, mit einem hohen Transparenzniveau in der Draufsicht dargestellt werden. Ein Linienelement, welches einen geringen Abstand eines Objekts von dem Kraftfahrzeug anzeigt, kann hingegen mit einer geringeren Transparenz oder ohne jegliche Transparenz in der Draufsicht dargestellt sein. Wird beispielsweise die Farbe als Darstellungsattribut verwendet, so kann ein Linienelement, welches einen großen Abstand eines Objekts unterhalb des Schwellenwertes anzeigt, grün dargestellt sein. Verringert sich der Abstand, kann die Farbe mit der Klassifizierung von grün nach gelb über orange bis rot verändert werden.

Um die Bedienung zu vereinfachen, ist bei einer bevorzugten Ausführungsform der Erfindung vorgesehen, dass die Anzeigevorrichtung als Touchscreen ausgebildet ist und zusätzlich zu der Draufsicht als zusätzliche Ansicht eine Ansicht einer der mehreren Bilderfassungseinheiten dargestellt ist, wobei eine Auswahl der Ansicht über eine Berührung der Anzeigefläche im Bereich der Darstellung der Umgebung in der Draufsicht erfolgen kann und die Ansicht der Bilderfassungseinheit als zusätzliche Ansicht ausgewählt ist, die den Teil der Umgebung darstellt, in dem die Berührposition in der Draufsicht liegt. Somit wird es für den Fahrer möglich, zeitgleich die Draufsicht und eine detaillierte Ansicht eines Teils der Umgebung wahrzunehmen. Die Auswahl der Ansicht, welche der Fahrer zusätzlich zur Draufsicht angezeigt bzw. dargestellt erhalten möchte, kann über eine einfache Berührung der in der Draufsicht dargestellten Umgebung erfolgen. Diese Bedienung ist für den Fahrer intuitiv. Somit sind mögliche Fehlbedienungen nicht zu erwarten. Es versteht sich für den Fachmann, dass die dargestellte zusätzliche Ansicht der Bilderfassungseinheit, welche ausgewählt ist, vor einer Darstellung einer Bildbearbeitung unterzogen sein kann, die beispielsweise das Bild entzerrt. Dieser Aspekt, eine Draufsicht mit einer zusätzlichen Ansicht, wie sie beispielsweise von einem Teilbereich der Umgebung des Kraftfahrzeugs Ober eine Kamera erfasst ist, auf derselben Anzeigefläche zeitgleich darzustellen, stellt eine eigenständige Erfindung dar. Ist die Anzeigefläche mit einer berührungsempfindlichen Positionserfassungseinheit gekoppelt, beispielsweise als Touchscreen ausgebildet, so kann über eine Berührung im Bereich der Draufsicht jene Kameraansicht, die den entsprechenden Bereich der Umgebung des Kraftfahrzeugs erfasst, für die zusätzliche Darstellung auf der Anzeigefläche ausgewählt werden. Ein solches Parkassistenzsystem ist auch ohne eine Einblendung von Linienelementen, die Abstände erkannter Objekte repräsentieren, ausführbar. In einer solchen Ausführungsform kann sich der Fahrer zugleich auf einen Blick über die Position des Fahrzeugs zu Objekten in der Umgebung als auch über die konkrete Ansicht der Umwelt (über die Kameraansicht) informieren, wie sie sich einem Fahrer gewöhnlich bietet. Dieser Vorteil gilt natürlich auch bei Ausführungsformen, bei denen zusätzlich die die Abstände repräsentierenden Linienelemente dargestellt werden.

Bei einer Ausführungsform der Erfindung ist vorgesehen, dass Grenzen zwischen Teilen der Umgebung, die jeweils von einer Bilderfassungseinheit erfasst werden, in der Draufsicht grafisch angezeigt sind. Hierdurch ist es für den Nutzer leicht nachvollziehbar, wie groß ein Teil der Umgebung ist, der von einer Bilderfassungseinheit dargestellt werden kann: Eine Auswahl eines entsprechenden Teils der Umgebung wird hierdurch erleichtert Liegt der interessierende Bereich der Umgebung beispielsweise an oder auf einer Grenze zwischen solchen Teilen, ist eine Wahl der entsprechenden Ansicht, d.h. eines entsprechenden Teils, beispielsweise von einer Fahrtrichtung abhängig. Es wird hier angemerkt, dass es selbstverständlich möglich ist, dass sich die Erfassungsbereiche der einzelnen Bilderfassungseinheiten überlappen. Die dargestellten Grenzen geben hierbei somit lediglich einen Hinweis, welchen Teil eine Ansicht mindestens umfasst.

Um sicherzustellen, dass die dargestellte Ansicht einer der Bilderfassungseinheiten auch den Bereich der Umgebung darstellt, den der Nutzer tatsächlich betrachten möchte, ist bei einer bevorzugten Ausführungsform der Erfindung vorgesehen, dass der Teil der Umgebung, dessen Ansicht zusätzlich dargestellt ist, in der Draufsicht grafisch hervorgehoben oder markiert ist, beispielsweise durch eine Umrandung, einer Hervorhebung der angrenzenden Grenzen zwischen den Teilen usw. Der Fahrer erkennt somit sofort, welcher Bereich der Umgebung in der zusätzlichen Ansicht dargestellt ist.

Bei einer Ausführungsform ist vorgesehen, dass mindestens ein weiterer Bereich in der Draufsicht vorgesehen ist und/oder dargestellt wird, dem eine weitere Funktionalität zugeordnet ist, so dass bei einer Berührung des mindestens einen weiteren Bereichs in der Draufsicht, eine der zugeordneten Funktionalität zugewiesene Ansicht als zusätzliche Ansicht (d.h. zusätzlich zur Draufsicht) dargestellt wird. Beispielsweise kann dieser mindestens eine weitere Bereich innerhalb der Kontur des Kraftfahrzeugs liegen. Diesem Bereich kann beispielsweise eine Konfigurationsfunktionalität zu geordnet sein. Eine Weiterbildung sieht vor, dass in der zusätzlichen Ansicht bzw. einem Darstellungsbereich der zusätzlichen Ansicht Konfigurationsinformationen, beispielsweise virtuelle Bedienelemente zur Anzeige gebracht oder ausgeblendet werden, wenn der mindestens eine weitere Bereich in der Draufsicht berührt wird. Wieder eine andere Ausführungsform sieht vor, dass dem mindestens einen weiteren Bereich oder noch einem zusätzlichen Bereich in der Draufsicht eine Funktionalität zugeordnet ist, der als Ansicht, die in dem Darstellungsbereich der zusätzlichen Ansicht gezeigt wird, eine Darstellung zugewiesen ist, die zumindest einen Teil der die ermittelten Abstände repräsentierenden Linienelemente relativ zu der Kontur des Kraftfahrzeugs, vorzugsweise vor einem synthetischen, besonders bevorzugt einfarbigen Hintergrund, dargestellt.

Häufig werden auf der Anzeige in unterschiedlichen Abschnitten zeitgleich unterschiedliche Informationen dargestellt. Die Informationen, die in einem Abschnitt der Anzeigefläche dargestellt sind, gehören in der Regel zu einem Darstellungsobjekt, z. B. die Bildpunkte einer Kameraansicht, oder sind inhaltlich oder thematisch oder hinsichtlich ihrer Funktion miteinander verknüpft. Hinsichtlich ihrer Funktion sind Objekte oder informationen verknüpft, wenn die Darstellungsobjekte beispielsweise alle als Betätigungseinrichtungen, beispielsweise grafische virtuelle Bedientasten etc. ausgebildet sind, die vorzugsweise miteinander in Beziehung stehende Funktionalitäten des Kraftfahrzeugs beeinflussen. Solche Abschnitte werden auch zum Teil als Fenster bezeichnet.

Beispielsweise werden auf der Anzeigefläche eines Touchscreen eines Parkassistenzsystems in einem Abschnitt (Fenster) der Anzeigefläche eine abgeleitete Draufsicht auf das Kraftfahrzeug und in einem anderen Abschnitt (anderen Fentser) Menüpunkte einer menügesteuerten Touchscreen-Benutzerschnittstelle als zusätzliche Ansicht angezeigt

Um den Komfort für den Nutzer einer solchen Touchsceen-Benutzerschnittstelle eines Parkassistenzsystems oder auch eines beliebigen anderen Einzel- oder Multifunktionsbediensystems in einem Kraftfahrzeug zu steigern ist nach einem eigenständigen erfinderischen Aspekt vorgesehen, dass über eine sogenannte Drag&Drop-Bedienung die Positionen der einzelnen Abschnitte (Fenster) durch den Nutzer veränderbar sind. Der Nutzer kann somit die Position eines Abschnitts (Fensters) verändern, ohne die in den übrigen Abschnitten dargestellten Informationen aus dem Auge zu verlieren.

Eine Weiterbildung des Parkassistenzsystems sieht somit vor, dass die Draufsicht und die zusätzliche Ansicht als Fenster aufgefasst werden und mindestens einem der Fenster ein Drag&Drop-Bereich zugeordnet ist und das dem Drag&Drop-Bereich zugeordnete Fenster über eine in dem Drag&Drop-Bereich erfolgende Berührung der Anzeigefläche, und eine anschließende streifende oder ziehende Bewegung eines Betätigungselement über die Anzeigefläche, ohne die Berührung zu unterbrechen, auf der Anzeigefläche aktiv positionierbar ist, wobei die Positionsänderung von der ziehenden Bewegung abhängig ist

Gemäß einer bevorzugten Ausführungsform weist mindestens ein Abschnitt (ein Fenster) einen Drag&Drop-Bereich auf. Berührt der Benutzer den Drag&Drop-Bereich mit einem Betätigungselement, beispielsweise seinem Finger, so kann er anschließend über eine ziehende Bewegung die Position des Abschnitts (des Fensters) auf der Anzeigefläche verändern und den Abschnitt (das Fenster) neu positionieren.

Bei einigen Ausführungsformen ist vorgesehen, dass die Abschnitte (Fenster) nur an bestimmten Positionen positionierbar sind. Beispielsweise kann vorsehen sein, dass ein Abschnitt (Fenster) entweder angrenzend an einen rechten oder einen linken Rand der Anzeigefläche positionierbar ist. In einem solchen Fall kann beispielsweise eine virtuelle Grenze vorgesehen sein, bei deren überstreichen durch das Betätigungselement während der ziehenden Bewegung der zu positionierende Abschnitt (Fenster) automatisch an die gegenüberliegende Bildschirmseite positioniert wird. Für ein Verschieben in einer entgegengesetzten Richtung kann eine weitere virtuelle Grenze vorgesehen sein, die nicht mit der zuerst erwähnten Grenze zusammenfallen muss.

Vorzugsweise wird der Abschnitt (das Fenster), welches durch die neue Positionierung eines Abschnitts verdeckt würde an die Position verschoben, an der der neu positionierte Abschnitt zuvor angeordnet war. Sind zwei Abschnitte (Fenster) vorhanden, so tauschen diese beispielsweise ihre Plätze. Sind mehr als zwei Abschnitte (Fenster) vorhanden, so werden zumindest die durch den verschobenen Abschnitt (das verschobene Fenster) hinsichtlich ihrer Darstellung auf der Anzeigefläche beeinflussten Abschnitte (Fenster) automatisch hinsichtlich ihrer Position und/oder Größe und/oder Form angepasst und verändert, so das der zuvor durch den aktiv verschobenen Abschnitt belegte Darstellungsbereich der Anzeigefläche durch die übrigen hinsichtlich ihrer Position und/oder Größe und/oder Form automatisch angepassten Abschnitte (Fenster) aufgefüllt wird. Die automatische Veränderung wird vorzugsweise so vorgenommen, dass der dargestellte Informationsgehalt für den Nutzer weitestgehend erhalten bleibt. Eine Ausführungsform sieht somit vor, dass das nicht über eine Berührung im Drag&Dropbereich und anschließende streifende Bewegung positionierte Fenster nach einer erfolgten Umpositionieren des (eines) andern Fensters automatisch so umpositioniert und/oder hinsichtlich der Form und/oder Größe angepasst wird, so dass die darin ursprünglich dargestellten Informationen nach wie vor wahrnehmbar sind und der Bereich der Anzeigefläche, der ursprünglich von dem aktiv umpositionierten Fenster eingenommen wurde, ausgefüllt ist.

Nachfolgend wird die Erfindung unter Bezugnahme auf eine Zeichnung näher erläutert. Hierbei zeigen:
- Fig. 1: eine schematische Darstellung eines Kraftfahrzeugs in einer Umgebung, wobei das Kraftfahrzeug ein Parkassistenzsystem umfasst;
- Fig. 2: eine schematische Aufteilung einer Anzeigefläche einer Anzeigevorrichtung eines Parkassistenzsystems;
- Fig. 3: eine schematische Ansicht eines Multifunktionsanzeige-und Bediengeräts, dessen Anzeigevorrichtung in das Parkassistenzsystem integriert ist,
- Fig. 4: eine schematische Aufteilung einer Anzeigefläche einer Anzeigevorrichtung einer weiteren Ausführungsform eines Parkassistenzsystems, und

- Fig. 5: eine schematische Aufteilung einer Anzeigefläche einer Anzeigevorrichtung noch einer weiteren Ausführungsform eines Parkassistenzsystems.

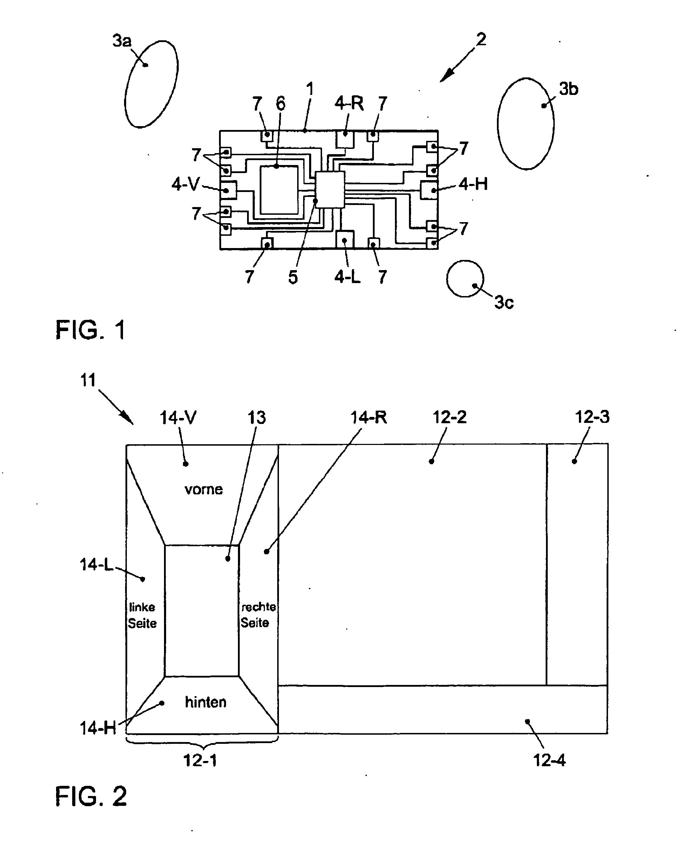

In Fig. 1 ist schematisch ein Kraftfahrzeug 1 in einer Umgebung 2 dargestellt. In der Umgebung 2 befinden sich Objekte 3a bis 3c. Das Kraftfahrzeug 1 umfasst Bilderfassungseinheiten 4-V, welche einen Teil der Umgebung 2 vor dem Kraftfahrzeug 1 erfasst, 4-R, die ein Teil der Umgebung 2 rechts von dem Kraftfahrzeug 1 erfasst, 4-H, die einen Teil der Umgebung 2 hinter dem Kraftfahrzeug 1 erfasst, und 4-L, welche einen Teil der Umgebung 2 links von dem Kraftfahrzeug 1 erfasst. Die Bilderfassungseinheiten 4-V bis 4-L, die im Folgenden durch das Bezugszeichen 4 bezeichnet werden, sofern eine spezielle Bezugnahme auf eine einzelne der mehreren Bilderfassungseinheiten nicht notwendig ist, sind mit einer Steuereinheit 5 verknüpft. Die Steuereinheit 5 ist ausgebildet, aus den Ansichten der Bilderfassungseinheiten 4 eine Draufsicht auf das Kraftfahrzeug 1 und die Umgebung 2 abzuleiten. Hierbei kann in einem zentralen Bereich der Draufsicht eine gespeicherte Abbildung oder synthetisch erzeugte Abbildung des Kraftfahrzeugs eingefügt sein. Die Steuereinheit 5 ist ferner mit einer Anzeigevorrichtung 6 gekoppelt, die vorzugsweise als Touchscreen ausgebildet ist. Auf einer Anzeigefläche der Anzeigevorrichtung 6 wird die Draufsicht ganz oder teilflächig dargestellt. Das Kraftfahrzeug 1 umfasst darüber hinaus mehrere Abstandssensoren 7, die jeweils ausgebildet sind, einen Abstand des Kraftfahrzeugs von einem Objekt 3a-3c in der Umgebung 2 des Kraftfahrzeugs 1 in einem jeweiligen Messbereich zu ermitteln. Die Abstandssensoren 7 sind ebenfalls mit der Steuereinheit 5 zumindest informationstechnisch verknüpft. Die Steuereinheit ist ausgebildet, die ermittelten Abstände mit einem Schwellenwert zu vergleichen. Für jeden ermittelten Abstand, der einen Schwellenabstand unterschreitet, wird in der Draufsicht ein Linienelement eingezeichnet, welches den ermittelten Abstand des Kraftfahrzeugs von einem Objekt repräsentiert. Die Linienelemente werden jeweils relativ zu einer Verbauposition des entsprechenden Sensors im Abstand von der Kontur des Kraftfahrzeugs grafisch dargestellt.

Bei einer bevorzugten Ausführungsform wird das entsprechende Linienelement jedoch nicht an jener Stelle grafisch dargestellt, die dem ermittelten Abstand entspricht, sondern vielmehr in einem Abstand eingezeichnet, der dem ermittelten Abstand abzüglich eines Sicherheitsabstands entspricht.

In Fig. 2 ist schematisch eine Ansicht einer Anzeigefläche 11 einer Anzeigevorrichtung dargestellt. Die Anzeigefläche 11 umfasst einen Draufsichtabschnitt 12-1. Der Draufsichtabschnitt 12-1 umfasst einen Kraftfahrzeugdarstellungsteil 13 sowie vier Kameraansichtsteile 14-V, 14-R, 14-H und 14-L, die Teile der Umgebung des Kraftfahrzeugs darstellen, die entsprechend mit einer Bilderfassungseinheit korrespondieren, die einen vorderen Bereich, einen rechten Seitenbereich, einen hinteren Bereich und einen linken Seitenbereich erfassen bzw. darstellen.

Die Anzeigefläche 11 umfasst ferner einen Kameraansicht-Abschnitt 12-2. In diesem wird eine ausgewählte zusätzliche Ansicht einer der Bilderfassungseinheiten des Kraftfahrzeugs dargestellt. Ferner umfasst die Anzeigefläche 4 einen Bedienelement-Abschnitt 12-3, in dem virtuelle Bedienelemente dargestellt sind. Über eine berührende Betätigung dieser Bedienelemente können die den Bedienelementen zugeordneten Funktionen ausgerührt bzw. ausgelöst werden. Schließlich umfasst die Anzeigefläche 11 noch einen Warn- und Hinweistext-Abschnitt 12-4. In diesem können Warn- und Hinweistexte dargestellt werden. Es versteht sich für den Fachmann, dass die hier beschriebene Aufteilung der Anzeigefläche lediglich eine beispielhafte Aufteilung angibt Insbesondere eine flächenmäßige Aufteilung der einzelnen Abschnitte 12-1 bis 12-4 kann beliebig anders gewählt werden. Ebenso können einzelne Abschnitte, insbesondere der Bedienelementeabschnitt 12-3 oder der Wam- und Hinweistext-Abschnitt 12-4 vollständig entfallen.

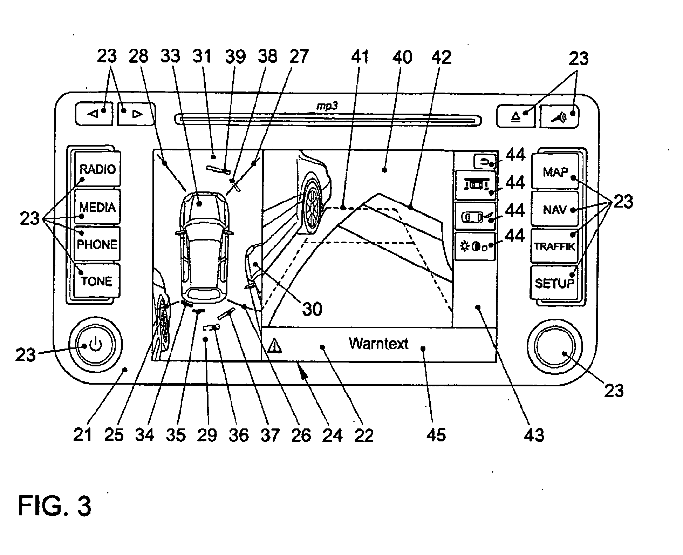

In Fig. 3 ist schließlich eine Ansicht eines Multifunktionsanzeige- und Bediengeräts 21 eines Kraftfahrzeugs dargestellt, dessen Anzeigefläche 22 in das Parkassistenzsystem integriert ist. Um die Anzeigefläche 22 sind mehrere in Hardware ausgeführte Bedienelemente 23 angeordnet, die als Tastschalter oder Drehdrücksteller ausgebildet sind. Eine Aufteilung der Anzeigefläche 21 entspricht der nach Fig. 2. In der Draufsicht 24 sind Grenzen 25-28 grafisch dargestellt, welche die einzelnen Teile 29-32 voneinander abgrenzen, welche entsprechend der Reihenfolge der Bezugszeichen den Teil hinter dem Kraftfahrzeug, den Teil rechts vom Kraftfahrzeug, den Teil vor dem Kraftfahrzeug und den Teil links vom Kraftfahrzeug darstellen. Eine Ansicht des Kraftfahrzeugs 33 ist in der Mitte der Draufsicht 24 dargestellt. Die Ansicht bzw. Darstellung des Kraftfahrzeugs 33 ist in der Regel eine in einem Speicher abgelegte fotografische Darstellung des Kraftfahrzeugs oder eine synthetisch erzeugte Ansicht des Kraftfahrzeugs.

In der Draufsicht 24 sind ferner Linienelemente 34-39 dargestellt. Diese repräsentieren jeweils einen ermittelten Abstand eines Abstandssensors des Kraftfahrzeugs von einem Objekt in der Umgebung des Kraftfahrzeugs. Hierbei sind die einzelnen Linienelemente 34-39 entsprechend der Entfernung, die sie repräsentieren, klassifiziert Die Linienelemente 34, 35, die einen Abstand unterhalb eines zweiten Schwellenwertes repräsentieren, sind in einer Abstandsklasse zusammengefasst und beispielsweise rot dargestellt. Die übrigen Linienelemente, die einen Abstand oberhalb des zweiten Schwellenwertes und unterhalb des ersten Schwellenwertes repräsentieren, sind in einer Ausführungsform beispielsweise gelb dargestellt. Ferner sind die einzelnen Linienelemente 34-39 nicht an jenen Positionen dargestellt, d.h. in einem grafischen Abstand zu einer Kontur des Kraftfahrzeugs dargestellt, die dem ermittelten Abstand entspricht. Vielmehr sind sie in einem grafischen Abstand von der Kontur des Kraftfahrzeugs jeweils bezogen auf eine Verbauposition des Abstandsensors, der den Abstand ermittelt hat, grafisch dargestellt, der dem ermittelten Abstand abzüglich eines Sicherheitsabstands entspricht. Bei anderen Ausführungsformen kann jedoch eine Darstellung mit einem grafischen Abstand erfolgen, der dem ermittelten Abstand entspricht.

Bei der dargestellten Ausführungsform grenzen die einzelnen Linienelemente jeweils lokal den Bereich der Umgebung ab, innerhalb dessen der Fahrer das Kraftfahrzeug bewegen kann, ohne dass er sich an einem Objekt dichter annähert, als der vorgegebene Sicherheitsabstand.

Von den dargestellten Grenzen 25-28 sind die Grenzen 25 und 26 hervorgehoben, die den Umgebungsbereich begrenzen, die den Teil der Umgebung hinter dem Kraftfahrzeug 29 begrenzen. Hierdurch erkennt der Fahrer, dass die zusätzliche Ansicht 40 den Teil der Umgebung hinter dem Kraftfahrzeug darstellt. Auch in der zusätzlichen Ansicht, die eine Ansicht einer der Bilderfassungseinheiten darstellt, können zusätzliche Informationen überlagert dargestellt sein, beispielsweise ein Fahrschlauch ohne Lenkeinschlag 41 oder mit Lenkeinschlag 42. In einem Bedienelementeabschnitt 43 sind virtuelle Bedienelemente 44 dargestellt, über die unterschiedliche Ansichtsoptionen der zusätzlichen Ansicht 40 ausgewählt werden können. Ferner ist auf der Anzeigefläche 22 ein Wam- und Hinweistextabschnitt 45 vorgesehen, in dem beispielsweise Wamtexte ausgegeben werden können.

Um als zusätzliche Ansicht beispielsweise die Ansicht der Bilderfassungseinheit angezeigt zu bekommen, die den Teil der Umgebung links von dem Kraftfahrzeug darstellt, kann der Fahrer die als Touchscreen ausgebildete Anzeigefläche links von der Kraflfahrzeugansicht 33 innerhalb der Draufsicht 24 berühren. So kann auf einfache Weise die zusätzliche Ansicht 40 ausgewählt werden.

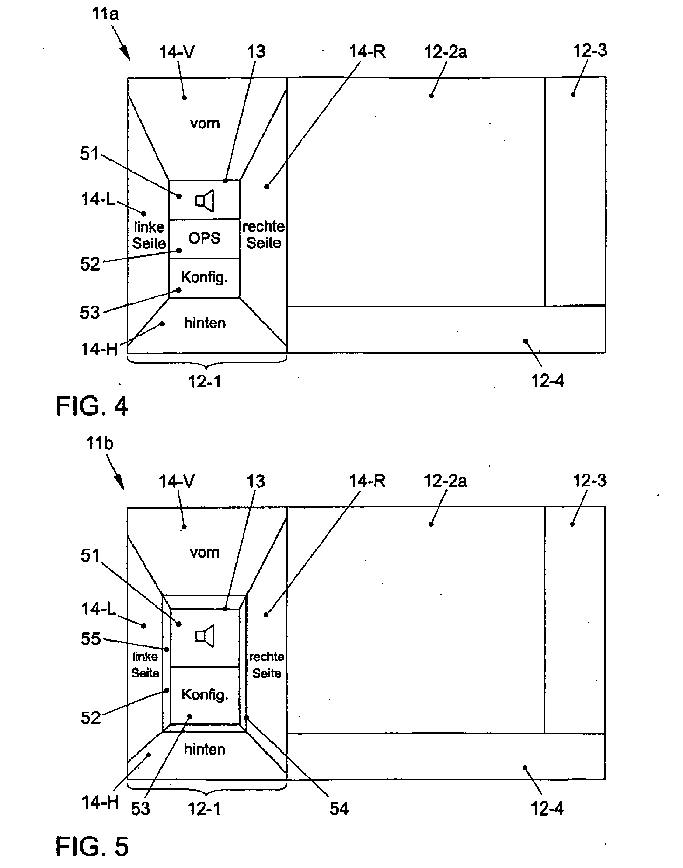

In Fig. 4 ist eine schematische eine Ansicht einer Anzeigefläche 11 a einer Anzeigevorrichtung einer weiteren Ausführungsform eines Parkassistenzsystems ähnlich mit dem, welches zu der Ansicht nach Fig. 2 korrespondiert, dargestellt. Die Anzeigevorrichtung ist mit einem positionsempfindlichen Sensor, beispielsweise als Touchscreen ausgebildet. Gleiche technische Merkmale sind mit denselben Bezugszeichen versehen. Die Anzeigefläche 11a umfasst einen Draufsichtabschnitt 12-1, einen Zusatzansicht-Abschnitt 12-2a, der dem Kameraansichtabschnitt 12-2 der Ausführungsform nach Fig. 2 entspricht, einen Bedienelement-Abschnitt 12-3 und einen Wam- und Hinweistext-Abschnitt 12-4.

In dem Draufsichtabschnitt 12-1 sind erneut Kameraansichtsteile 14-V, 14-R, 14-H und 14-L vorgesehen, die Teile der Umgebung des Kraftfahrzeugs darstellen, die entsprechend mit einer Bilderfassungseinheit korrespondieren, die einen vorderen Bereich, einen rechten Seitenbereich, einen hinteren Bereich und einen linken Seitenbereich erfassen bzw. darstellen. Ein zentraler Kraftfahrzeugdarstellungsteil 13 ist in dieser Ausführungsform in einen Mute-Bereich 51, einen OPS-Bereich 52 und einen Konfigurationsbereich 53 unterteilt. Bei einer Berührung des Mute-Bereichs 51 wird zwischen einer Stummschaltung und einer Aktivierung einer akustischen Ausgabe von Wam- und/oder Hinweisinformationen umgeschaltet. Eine Berührung im OPS-Bereich 52, bewirkt eine Einblendung (oder bei einigen Ausführungsformen bei einer erneuten Betätigung auch eine Ausblendung) einer Darstellung in dem Zusatzansichtabschnitt 12-2a, die die einen ermittelten Abstand eines Objekts in der Umgebung des Kraftfahrzeugs repräsentierenden Linienelemente, vorzugsweise vor einem einfarbigen synthetischen Hintergrund oder einem einen Farbübergang darstellenden synthetischen Hintergrund, zeigen. Als synthetischer Hintergrund wird hier ein Hintergrund angesehen, der kein mit einer Kamera aufgenommenes Bild zeigt. Die Linienelemente sind relativ zu einer Kontur des Kraftfahrzeugs, welches in der Darstellung schematisch repräsentiert wird, dargestellt. Eine solche Darstellung der Linienelemente wird hier auch als OPS-Darstellung bezeichnet, wobei OPS eine Abkürzung für den Begriff optisches Park-System darstellt.

Eine Berührung des Konfigurationsbereichs 53 führt zum Einblenden/Ausblenden eines Konfigurationsmenus oder einer Konfigurationsansicht in dem Zusatzansicht-Abschnitt 12-2a. In der Konfigurationsansicht werden beispielsweise virtuelle Bedienelemente zum Erfassen von Nutzereingaben dargestellt. Über die erfassten Nutzereingaben kann das Parkassistenzsystem konfiguriert werden. Analog zu der Ausführungsform nach Fig. 3

Bei einer anderen Ausführungsform, ähnlich zu der nach Fig. 4, Ist in Fig. 5 beispielsweise der OPS-Bereich 52 einer Ansicht 11b als ein den Kraftfahrzeugdarstellungsteil 13 umlaufend umschließender Streifen ausgebildet, der die Kameraansichtsteile 14-V, 14-R, 14-H und 14-L jeweils teilweise überdeckt. Hierbei ist der OPS-Bereich 52 in der Regel bis auf eine gegebenenfalls vorgesehene Umrandung 54 transparent dargestellt. Bei einer Ausführungsform ist vorgesehen, dass eine Berührung in dem OPS-Bereich 52 eine OPS-Ansicht der gesamten Fahrzeugumgebung in dem Zusatzansichtabschnitt 12-2a bewirkt und keine vergrößerte Wiedergabe des Kamerabilds, welches jenem Kameraansichtsteil 14-V, 14-R, 14-H, 14-L zugeordnet ist, in dem die Berührstelle des überlagerten OPS-Bereichs 52 liegt. Bei einer Ausführungsform führt jedoch eine emeute Berührung der Anzeigefläche an derselben Stelle zu einer Ausblendung der OPS-Ansicht und Einblendung oder Wiedergabe des entsprechenden Kamerabilds der Kamera, die dem korrespondierenden Kameraansichtsteil 14-V, 14-R, 14-H, 14-L zugeordnet ist, in dem die emeute Berührung stattfindet. Erfolgt eine Berührung der Draufsicht in einem Kameraansichtsteil 14-V, 14-R, 14-H, 14-L, der nicht durch den OPS-Bereich 52 überlagert ist, so wird die entsprechende Kameraansicht in dem Zusatzansichtabschnitt 12-2a dargestellt. Analoges git auch für die Ausführungsform nach Fig. 4.

Ebenso kann bei einer Ausführungsform vorgesehen sein, dass bei einer Berührung des OPS-Bereichs 52 an einer Berührposition 55 in dem Zusatzansichtabschnitt 12-2a jener Teil der der OPS-Ansicht dargestellt wird, der im Wesentlichen mit dem entsprechenden Erfassungsbereich derjenigen Kamera korrespondiert, deren Kameraansicht an der Berührposition 55 des OPS-Bereichs 52 durch diesen überdeckt ist. Im dargestellten Beispiel wird somit der Teil der OPS-Ansicht in dem Zusatzansichtabschnitt 12-2a dargestellt, die Umgebung seitlich links vom Kraftfahrzeug betrifft. Hierbei sind Ausführungsformen möglich, bei denen die entsprechende, angepasst transformierte Kameraansicht als Hintergrund der entsprechenden OPS-Teilansicht in dem Zusatzansichtabschnitt 12-2a dargestellt wird. Alternativ ist es möglich die OPS-Teilansicht vor einem synthetischen Hintergrund, beispielsweise einem einfarbigen Hintergrund darzustellen.

Ansonsten entsprechen die Ausführungsformen nach Fig. 5 der nach Fig. 4.

Bei einigen Ausführungsformen ist vorgesehen, dass der Bereich bzw. der Teil in der Draufsicht hervorgehoben wird oder ist, dessen zugehörige Kameraansicht der Umgebung des Kraftfahrzeugs oder dessen OPS-Teilansicht in dem Zusatzansichtabschnitt 12-2a dargestellt wird oder ist. Die Hervorhebung kann beispielsweise durch eine farbige Markierung der Umrandungen des Bereich bzw. Teils in der Draufsicht erfolgen.

Bei einer Ausführungsform nach Fig. 4 oder 5 ist vorgesehen, dass noch ein weiterer Bereich in der Draufsicht, beispielsweise im Kraftfahrzeugdarstellungsteil vorgesehen ist, dem die Funktionalität zugewiesen ist, bei Berührung die Einblendung der die erfassten Abstände repräsentierenden Linienelemente in den Kameraansichtsteilen der Draufsicht ein- und/oder auszuschalten.

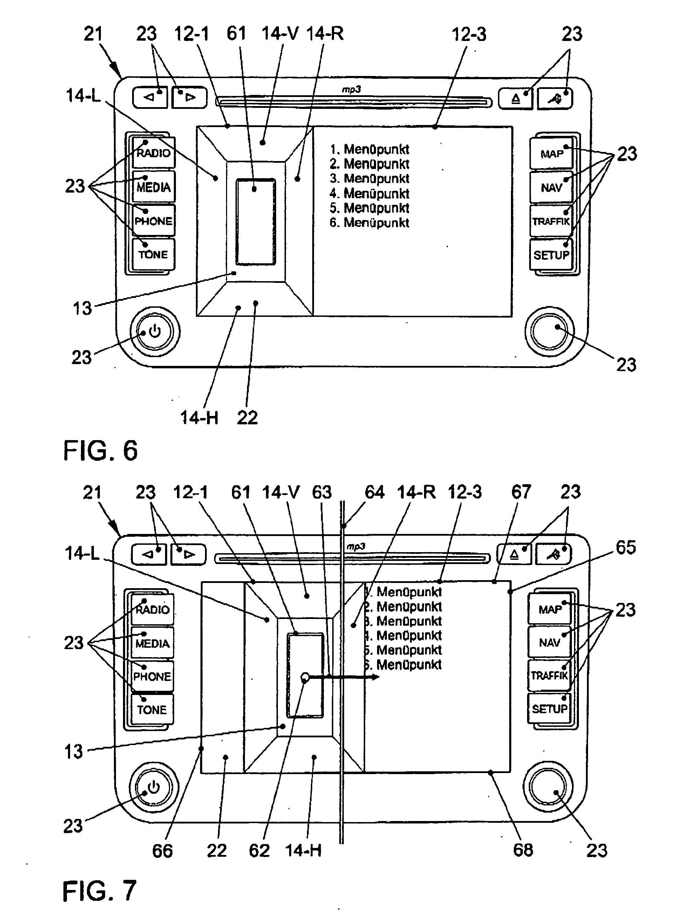

In Fig. 6 ist ein Ausführungsform eines Multifunktionsanzeige -und Bediengeräts 21 ähnlich zu dem nach Fig. 3 gezeigt. Gleiche technische Merkmale sind mit identischen Bezugszeichen versehen und werden hier nicht erneut erläutert. Auf der Anzeigefläche22 sind ein Draufsicht-Abschnitt 12-1 (Draufsichtfenster) und ein Bedienelemente-Abschnitt 12-3 (Bedienfenster) dargestellt. In dem Draufsicht-Abschnitt 12-1 ist beispielsweise eine Draufsicht 24 analog zu der nach Fig. 3 dargestellt. Die Darstellung in dem Bedienelemente-Abschnitt 12-3 stellt eine zusätzliche Ansicht (40) im Sinne der Ausführungsform nach Fig. 3 dar. Die einzelnen Bedienelemente in dem Bedienelemente-Abschnitt 12-3 sind hier als Einträge eines Menüs ausgebildet.

Der Draufsichtabschnitt 12-1 unterteilt sich beispielsweise analog zu der Ausführungsform nach Fig. 2 in Kamerateilansichten der Umgebung 14-V, 14-R, 14-L, 14-R so wie einen Kraftfahzeugdarstellungsteil 13. In diesem ist ein Drag&Drop-Bereich 61 vorgesehen. Berührt der Nutzer die Anzeigefläche 22 in diesem Drag&Drop-Bereich mit einem Betätigungselement, vorzugsweise seinem Finger, (nicht dargestellt) und hält diese Berührung aufrecht, während er mit dem Betätigungselement über die Anzeigefläche 22 streift, so zieht er den Draufsichtabschnitt 12-1, den man auch als Draufsichtfenster bezeichnen kann an eine neue Position.

Dieses ist in Fig. 7 exemplarisch dargestellt Die ursprüngliche Berührposition 62 liegt hier zentral in dem Drag&Drop-Bereich. Ein erster Verschiebepfeil 63 deutet die zeihende Bewegung des Betätigungselements an. Der Draufsichtabschnitt 12-1 wird vorzugsweise so dargestellt, dass dieser mit dem Betätigungselement (nicht dargestellt) bei der streifenden oder ziehenden Bewegung mitbewegt wird.

In Fig. 7 ist ferner eine virtuelle Grenze 64 eingezeichnet, die für den Nutzer nicht sichtbar ist In anderen Ausführungsformen kann diese Grenze auch sichtbar dargestellt sein.

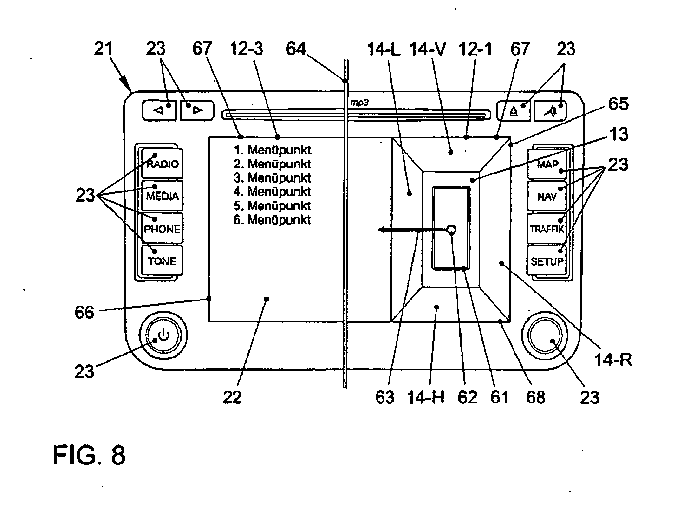

Überstreicht das Betätigungselement (beispielsweise der Finger) diese virtuelle Grenze 64, so wird der Draufsichtabschnitt 12-1 automatisch so positioniert, dass er an einen rechten Rand 65 der Anzeigefläche 22 angrenzend positioniert wird. Der Bedienelemente-Abschnitt 12-3 (das Bedienfenster) wird daraufhin automatisch so umpositioniert, dass es entsprechend an einen linken Rand 66 angrenzt. Diese ist in Fig. 8 dargestellt. Der Draufsichtabschnitt 12-1 und der Bedienelemente-Abschnitt 12-3 "tauschen" bei dieser Ausftlhrungsform somit ihre "Plätze".

Wie in Fig. 8 angedeutet ist kann der Bedienelemente-Abschnitt 12-3 natürlich auf dieselbe Art und Weise auch wieder in seine ursprüngliche Darstellungsposition zurück verschoben werden. Die virtuelle Grenze 64 ist in dem beschriebenen Ausführungsbeispiel für beide Verschieberichtungen identisch. Diese muss jedoch nicht der Fall sein.

Bei der beschriebenen Ausführungsform ist vorgesehen, dass der Draufsichtabschnitt 12-1, der aktiv positioniert wird, automatisch in die Ausgangsposition zurückkehrt, wenn das Betätigungselement die virtuelle Grenze 64 nicht überstricht, bevor die Berührung des Drag&Drop-Bereichs unterbrochen oder beendet wird, d.h. der Draufsichtabschnitt 12-1 (das Draufsichtfenster) fallen gelassen wird, was durch den englischen Begriff "drop" ausgedruckt ist.

Es ergibt sich für den Fachmann, dass es vorteilhaft sein kann, hinsichtlich der Positionierung Rand- oder Zwangsbedingungen festzulegen. Beispielsweise kann es wünschenswert sein, dass der aktiv verschobene Abschnitte jeweils nur so verschoben werden kann, dass diese vollständig sichtbar bleibt. Im dargestellten einfachen Beispiel bedeutet dieses, dass nur die Rechts-/Links-Bewegung des Betätigungselements einen Einfluss auf die Positionierung hat, da der Draufsichtabschnitt 12-1 die Anzeigefläche bereits von einem oberen Rand 67 bis zu einem unteren Rand 68 ausfüllft.

Bei anderen Ausführungsformen ist vorgesehen, dass die übrigen Abschnitte automatisch hinsichtlich ihrer Position und gegebenenfalls ebenso hinsichtlich ihrer Form und Größe so angepasst werden, dass die Anzeigefläche voll ausgefüllt wird und möglichst alle Informationen dargestellt werden, die vor dem aktiven Verschieben eines der Abschnitte sichtbar waren.

Bei einigen Ausführungsformen weisen mehrere Abschnitte (Fenster), vorzugsweise alle Abschnitte (Fenster) einen eigenen Drag&Drop-Bereich auf, so dass alle Abschnitte (Fenster) individuell nach den Erfordemissen und Wünschen des entsprechenden Nutzers platziert werden können.

Es versteht sich, dass die in dem beschriebenen Ausführungsbeispiel angegebenen Inhalte der Abschnitte (Fenster) nur beispielhaften Charakter haben. Die Umpositionierung der Abschnitte kann auch in anderen Benutzerschnittstellen im Fahrzeug, also auch unabhängig von dem Kontext des Parkassistenzsystems vorteilhaft verwendet werden. Ebenso können auch andere Abschnitte (Fenster) eines Parkassistenzsystems als die hier beispielhaft verwendeten Abschnitte (Fenster) mittels eines Drag&Drop-Verfahrens verschiebbar ausgestaltet sein.

Es versteht sich für den Fachmann, dass lediglich beispielhafte Ausführungsformen beschrieben sind.

### Bezugszeichenliste

- 1: Kraftfahrzeug
- 2: Umgebung
- 3a-3c: Objekte
- 4-V: Bilderfassungseinheit vorne
- 4-R: Bilderfassungseinheit rechts
- 4-L: Bilderfassungseinheit links
- 4-H: Bilderfassungseinheit hinten
- 5: Steuereinheit
- 6: Anzeigevorrichtung
- 7: Abstandssensoren
- 11, 11a,: 11b Anzeigefläche
- 12-1: Draufsicht-Abschnitt
- 12-2: Kameraansicht-Abschnitt
- 12-2a: Zusatzansicht-Abschnitt
- 12-3: Bedienelement-Abschnitt
- 12-4: Warn- und Hinweistext-Abschnitt
- 13: Kraftfahrzeugdarstellungsteil
- 14-V: Kameraansichtsteil der Umgebung vor dem Kraftfahrzeug
- 14-R: Kameraansichtsteil der Umgebung seitlich rechts vom Kraftfahrzeug
- 14-L: Kameraansichtsteil der Umgebung seitlich links vom Kraftfahrzeug
- 14-H: Kameraansichtsteil der Umgebung hinter dem Kraftfahrzeug
- 21: Multifunktionsanzeige- und Bediengerät
- 22: Anzeigefläche
- 23: Bedienelemente
- 24: Draufsicht
- 25-28: Grenzen
- 29: Teil der Umgebung hinter dem Kraftfahrzeug
- 30: Teil der Umgebung seitlich rechts des Kraftfahrzeugs
- 31: Teil der Umgebung vor dem Kraftfahrzeug
- 32: Teil der Umgebung seitlich links des Kraftfahrzeugs
- 33: Ansicht des Kraftfahrzeugs
- 34-39: Linienelemente
- 40: zusätzliche Ansicht (Kameraansicht)
- 41: Fahrschlauch (ohne Lenkeinschlag)
- 42: Fahrschlauch (mit Lenkeinschlag)
- 43: Bedienelemente-Abschnitt
- 44: virtuelle Bedienelemente
- 45: Wam- und Hinweistext-Abschnitt
- 51: Mute-Bereich
- 52: OPS-Bereich
- 53: Konfigurationsbereich
- 54: Umrandung
- 55: Berührposition
- 61: Drag&Drop-Bereieh
- 62: Berührposition
- 63: Verschiebepfeil
- 64: virtuelle Grenze
- 65: rechter Rand der Anzeigefläche
- 66: linker Rand der Anzeigefläche
- 67: oberer Rand der Anzeigefläche
- 68: unterer Rand der Anzeigefläche

## Patentansprüche

1. Parkassistenzsystem für ein Kraftfahrzeug (1) umfassend mehrere Bilderfassungseinheiten (4-V, 4-R, 4-L, 4-H) zum Erfassen der Umgebung (2) des Kraftfahrzeugs (1),
eine Anzeigevorrichtung (6) zum Darstellen einer Draufsicht (24) auf das Kraftfahrzeug (1) und seine Umgebung (2), die aus den erfassten Ansichten der mehreren Bilderfassungseinheiten (4-V, 4-R, 4-L, 4-H) abgeleitet ist, und
zusätzlich zu den Bilderfassungseinheiten (4-V, 4-R, 4-L, 4-H) mehrere Abstandssensoren (7) zum Erfassen von Abständen von Objekten (3a-3c) in der Umgebung (2) des Kraftfahrzeugs (1),
**dadurch gekennzeichnet, dass**
für jeden ermittelten Abstand, der kleiner als ein Schwellenabstand ist ein Linienelement (34- 39), beispielsweise ein Kreissektorelement, in der Draufsicht (24) grafisch dargestellt wird, wobei eine grafische Entfernung des jeweiligen Linienelements (34- 39) von einer Kontur des Kraftfahrzeugs (1) dem ermittelten Abstand des ermittelten Objekts (3a-3c) von dem Kraftfahrzeug (1) entspricht oder die grafische Entfernung des Linienelements (34-39) von der Kontur des Kraftfahrzeugs (1) dem ermittelten Abstand des entsprechenden Objekts (3a-3c) von dem Kraftfahrzeug (1) abzüglich eines Sicherheitsabstands entspricht.

2. Parkassistenzsystem nach Anspruch 1, **dadurch gekennzeichnet, dass** eine Länge des Linienelements (34- 39) eine Ausdehnung eines Messbereichs des entsprechenden Abstandssensors (7) andeutet.

3. Parkassistenzsystem nach einem der vorangehenden Ansprüche, **dadurch gekennzeichnet, dass** die Linienelemente (34- 39) entsprechend ihrer zugeordneten Abstände der jeweiligen Objekte (3a-3c) von dem Kraftfahrzeug (1) klassifiziert sind und die Klassifizierung mittels eines Darstellungsattributs, beispielsweise einer Linienart und/oder einer Farbe und/oder einer Darstellungsart, angezeigt ist.

4. Parkassistenzsystem nach einem der vorangehenden Ansprüche, **dadurch gekennzeichnet, dass** die Anzeigevorrichtung (6) als Touchscreen ausgebildet ist und zusätzlich zu der Draufsicht (24) eine zusätzliche Ansicht (40) einer der mehreren Bilderfassungseinheiten (4-V, 4-R, 4-L, 4-H) dargestellt ist, wobei eine Auswahl der zusätzlichen Ansicht (40) über eine Berührung der Anzeigefläche (22) im Bereich der Darstellung der Umgebung (2) in der Draufsicht (24) erfolgen kann und die Ansicht der Bilderfassungseinheit (4-V, 4-R, 4-L, 4-H) als zusätzliche Ansicht ausgewählt ist, die den Teil (29-33) der Umgebung (2) darstellt, in dem die Berührposition in der Draufsicht (24) liegt.

5. Parkassistenzsystem nach Anspruch 4, **dadurch gekennzeichnet, dass** der Teil (29) der Umgebung (2), dessen Ansicht zusätzlich als zusätzliche Ansicht (40) dargestellt ist, in der Draufsicht (24) grafisch hervorgehoben oder markiert ist, beispielsweise durch eine Umrandung oder eine Hervorhebung der angrenzenden Grenzen (25, 26) zwischen den Teilen (29, 30, 32) der Umgebung (2).

6. Parkassistenzsystem nach Anspruch 4 oder 5, **dadurch gekennzeichnet, dass** mindestens ein weiterer Bereich in der Draufsicht (24) vorgesehen ist, dem eine weitere Funktionalität zugeordnet ist, so dass bei einer Berührung des mindestens einen weiteren Bereichs in der Draufsicht (24), eine der zugeordneten Funktionalität zugewiesene Ansicht als zusätzliche Ansicht dargestellt wird.

7. Parkassistenzsystem nach einem der Ansprüche 4 bis 6, **dadurch gekennzeichnet, dass** die Draufsicht (24) und die zusätzliche Ansicht (40) als Fenster aufgefasst werden und mindestens einem der Fenster ein Drag&Drop-Bereich (61) zugeordnet ist und das dem Drag&Drop-Bereich (61) zugeordnete Fenster über eine in dem Drag&Drop-Bereich erfolgende Berührung der Anzeigefläche und eine anschließende streifende oder ziehende Bewegung eines Betätigungselement über die Anzeigefläche, ohne die Berührung zu unterbrechen, auf der Anzeigefläche aktiv positionierbar ist, wobei die Positionsänderung von der ziehenden Bewegung abhängig ist.

8. Parkassistenzsystem nach Anspruch 7, **dadurch gekennzeichnet, dass** das nicht über die Berührung im Drag&Drop-Bereich (61) und anschließende streifende Bewegung positionierte Fenster nach einer erfolgten Umpositionieren des andern Fensters automatisch so umpositioniert und/oder hinsichtlich der Form und/oder Größe angepasst wird, so dass die darin ursprünglich dargestellten Informationen nach wie vor wahrnehmbar sind und der Bereich der Anzeigefläche, der ursprünglich von dem aktiv umpositionierten Fenster eingenommen wurde, ausgefüllt ist.

9. Verfahren zum Betreiben eines Parkassistenzsystem für ein Kraftfahrzeug (1) umfassend die Schritte:
Erfassen mehrerer Ansichten der Umgebung (2) des Kraftfahrzeugs (1) mittels mehrerer Bilderfassungseinheiten (4-V, 4-R, 4-L, 4-H),
Ableiten einer Draufsicht (24) auf das Kraftfahrzeug (1) und seine Umgebung (2) aus den erfassten Ansichten der mehreren Bilderfassungseinheiten (4-V, 4-R, 4-L, 4-H),
Darstellen der Draufsicht (24) auf einer Anzeigevorrichtung (6),
Erfassen von Abständen von Objekten (3a-3c) in der Umgebung (2) des Kraftfahrzeugs (1) mittels mehrerer zusätzlich zu den Bilderfassungseinheiten (4-V, 4-R, 4-L, 4-H) vorhandenen Abstandssensoren (7),
**dadurch gekennzeichnet, dass**
für jeden ermittelten Abstand, der kleiner als ein Schwellenabstand ist, ein Linienelement (34- 39), beispielsweise ein Kreissektorelement, in der Draufsicht (24) grafisch dargestellt wird, wobei eine grafische Entfernung des jeweiligen Linienelements (34- 39) von einer Kontur des Kraftfahrzeugs (1) dem ermittelten Abstand des ermittelten Objekts (3a-3c) von dem Kraftfahrzeug (1) entspricht oder die grafische Entfernung des Linienelements (34-39) von der Kontur des Kraftfahrzeugs (1) dem ermittelten Abstand des entsprechenden Objekts (3a-3c) von dem Kraftfahrzeug (1) abzüglich eines Sicherheitsabstands entspricht.

10. Verfahren nach Anspruch 9, **dadurch gekennzeichnet, dass** über eine Länge des Linienelements (34-39) jeweils eine Ausdehnung eines Messbereichs des entsprechenden Abstandssensors (7) angedeutet wird.

11. Verfahren nach Anspruch 9 oder 10, **dadurch gekennzeichnet, dass** die Linienelemente (34- 39) entsprechend ihrer zugeordneten Abstände der jeweiligen Objekte (3a-3c) von dem Kraftfahrzeug (1) klassifiziert werden und die Klassifizierung mittels eines Darstellungsattributs, beispielsweise einer Linienart und/oder einer Farbe und/oder einer Darstellungsart, angezeigt wird.

12. Verfahren nach einem der Ansprüche 9 bis 11, **dadurch gekennzeichnet, dass** zusätzlich zu der Draufsicht (24) eine zusätzliche Ansicht (40) einer der mehreren Bilderfassungseinheiten (4-V, 4-R, 4-L, 4-H) dargestellt wird, wobei eine Auswahl der zusätzlichen Ansicht (40) über eine Berührung der Anzeigefläche (22) im Bereich der Darstellung der Umgebung (2) in der Draufsicht (24) erfolgen kann und hierfür eine Berührposition eines Nutzers erfasst wird und anhand der Berührposition festgestellt wird, welche Ansicht den Teil der Umgebung (2) darstellt, in dem die Berührposition in der Draufsicht (24) liegt, und diese Ansicht als zusätzliche Ansicht (40) verwendet wird.

13. Verfahren nach Anspruch 12, **dadurch gekennzeichnet, dass** die Grenzen (25-28) zwischen den Teilen (29-32) der Umgebung (2) in der Draufsicht (24) grafisch angezeigt werden.

14. Verfahren nach Anspruch 12 oder 13, **dadurch gekennzeichnet, dass** der Teil der Umgebung (2), dessen Ansicht zusätzlich dargestellt wird, in der Draufsicht (24) grafisch hervorgehoben oder markiert wird, beispielsweise durch eine Umrandung oder eine Hervorhebung der angrenzenden Grenzen (25, 26) zwischen den Teilen (29, 30, 32) der Umgebung (2).

15. Verfahren nach einem der Ansprüche 12 bis 14, **dadurch gekennzeichnet, dass** die Draufsicht (24) und die zusätzliche Ansicht (40) als Fenster aufgefasst werden und mindestens einem der Fenster ein Drag&Drop-Bereich (61) zugeordnet ist und das dem Drag&Drop-Bereich (61) zugeordnete Fenster über eine in dem Drag&Drop-Bereich erfolgende Berührung der Anzeigefläche und eine anschließende streifende oder ziehende Bewegung eines Betätigungselements über die Anzeigefläche, ohne die Berührung zu unterbrechen, auf der Anzeigefläche aktiv positioniert wird, wobei die Positionsänderung abhängig von der ziehenden Bewegung vorgenommen wird.

## Claims

1. Parking assistance system for a motor vehicle (1), comprising a plurality of image-capturing units (4-V, 4-R, 4-L, 4-H) for capturing the surroundings (2) of the motor vehicle (1),
a display device (6) for displaying a plan view (24) of the motor vehicle (1) and its surroundings (2), which plan view (24) is derived from the captured views of the plurality of image-capturing units (4-V, 4-R, 4-L, 4-H), and in addition to the image-capturing units (4-V, 4-R, 4-L, 4-H) a plurality of distance sensors (7) for capturing distances from objects (3a-3c) in the surroundings (2) of the motor vehicle (1),
**characterized in that**
for each identified distance which is shorter than a threshold distance a line element (34-39), for example a circular sector element, is displayed graphically in the plan view (24), wherein a graphic distance of the respective line element (34-39) from a contour of the motor vehicle (1) corresponds to the identified distance of the identified object (3a-3c) from the motor vehicle (1) or the graphic distance of the line element (34-39) from the contour of the motor vehicle (1) corresponds to the identified distance of the corresponding object (3a-3c) from the motor vehicle (1) minus a safety distance.

2. Parking assistance system according to Claim 1, **characterized in that** a length of the line element (34-39) indicates an extent of a measuring range of the corresponding distance sensor (7).

3. Parking assistance system according to one of the preceding claims, **characterized in that** the line elements (34-39) are classified according to their assigned distances of the respective objects (3a-3c) from the motor vehicle (1), and the classification is displayed by means of a display attribute, for example a type of line and/or a colour and/or a method of display.

4. Parking assistance system according to one of the preceding claims, **characterized in that** the display device (6) is embodied as a touchscreen, and in addition to the plan view (24) an additional view (40) of one of the plurality of image-capturing units (4-V, 4-R, 4-L, 4-H) is displayed, wherein a selection of the additional display (40) can be made by touching the display surface (22) in the region of the display of the surroundings (2) in the plan view (24), and the view of the image-capturing unit (4-V, 4-R, 4-L, 4-H) is selected as an additional view which displays the part (29-33) of the surroundings (2) in which the contact position is located in the plan view (24).

5. Parking assistance system according to Claim 4, **characterized in that** the part (29) of the surroundings (2) whose view is additionally displayed as an additional view (40) is graphically highlighted or marked in the plan view (24), for example by placing a border around or highlighting the adjoining boundaries (25, 26) between the parts (29, 30, 32) of the surroundings (2).

6. Parking assistance system according to Claim 4 or 5, **characterized in that** at least one further region is provided in the plan view (24), in which region a further functionality is assigned so that when the at least one further region in the plan view (24) is touched a view which is allocated to the assigned functionality is displayed as an additional view.

7. Parking assistance system according to one of Claims 4 to 6, **characterized in that** the plan view (24) and the additional view (40) are in the form of windows and at least one of the windows is assigned a drag & drop region (61) and the window which is assigned to the drag & drop region (61) can be positioned actively on the display surface by touching the display surface in the drag & drop region and a subsequent sweeping or dragging movement of an actuation element over the display surface without interrupting the contact, wherein the change in position is dependent on the dragging movement.

8. Parking assistance system according to Claim 7, **characterized in that** the window which is not positioned by means of the contact in the drag & drop region (61) and the subsequent sweeping movement is automatically repositioned after the other window has been repositioned and/or is adapted in terms of its shape and/or size with the result that the information originally displayed therein can continue to be perceived and the region of the display surface which was originally occupied by the window which has been actively repositioned is filled in.

9. Method for operating a parking assistance system for a motor vehicle (1), comprising the steps:
capturing of multiple views of the surroundings (2) of the motor vehicle (1) by means of a plurality of image-capturing units (4-V, 4-R, 4-L, 4-H),
derivation of a plan view (24) of the motor vehicle (1) and its surroundings (2) from the captured views of the plurality of image-capturing units (4-V, 4-R, 4-L, 4-H), displaying of the plan view (24) on a display device (6),
detection of distances of objects (3a-3c) in the surroundings (2) of the motor vehicle (1) by means of a plurality of distance sensors (7) which are present in addition to the image-capturing units (4-V, 4-R, 4-L, 4-H),
**characterized in that**
for each identified distance which is shorter than a threshold distance a line element (34-39), for example a circular sector element, is displayed graphically in the plan view (24), wherein a graphic distance of the respective line element (34-39) from a contour of the motor vehicle (1) corresponds to the identified distance of the identified object (3a-3c) from the motor vehicle (1) or the graphic distance of the line element (34-39) from the contour of the motor vehicle (1) corresponds to the identified distance of the corresponding object (3a-3c) from the motor vehicle (1) minus a safety distance.

10. Method according to Claim 9, **characterized in that** an extent of a measuring range of the corresponding distance sensor (7) is indicated in each case over a length of the line element (34-39).

11. Method according to Claim 9 or 10, **characterized in that** the line elements (34-39) are classified in accordance with their assigned distances of the respective objects (3a-3c) from the motor vehicle (1), and the classification is displayed by means of a display attribute, for example a type of line and/or a colour and/or a method of display.

12. Method according to one of Claims 9 to 11, **characterized in that** in addition to the plan view (24) an additional view (40) of one of the plurality of image-capturing units (4-V, 4-R, 4-L, 4-H) is displayed, wherein a selection of the additional view (40) can be made by touching the display surface (22) in the region of the display of the surroundings (2) in the plan view (24), and for this purpose a contact position of a user is detected and on the basis of the contact position it is determined which view displays the part of the surroundings (2) in which the contact position is located in the plan view (24), and this view is used as an additional view (40).

13. Method according to Claim 12, **characterized in that** the boundaries (25-28) between the parts (29-32) of the surroundings (2) are displayed graphically in the plan view (24).

14. Method according to Claim 12 or 13, **characterized in that** the part of the surroundings (2) whose view is additionally displayed is graphically highlighted or marked in the plan view (24), for example by placing a border around or highlighting the adjacent boundaries (25, 26) between the parts (29, 30, 32) of the surroundings (2).

15. Method according to one of Claims 12 to 14, **characterized in that** the plan view (24) and the additional view (40) are in the form of windows and at least one of the windows is assigned a drag & drop region (61) and the window which is assigned to the drag & drop region (61) is positioned actively on the display surface by touching the display surface in the drag & drop region and a subsequent sweeping or dragging movement of an activation element over the display surface without interrupting the contact, wherein the change in position is performed as a function of the dragging movement.

## Revendications

1. Système d'assistance au stationnement pour un véhicule automobile (1) comprenant plusieurs unités d'acquisition d'image (4-V, 4-R, 4-L, 4-H) pour acquérir l'environnement (2) du véhicule automobile (1),
une unité d'affichage (6) pour représenter une vue de dessus (24) du véhicule automobile (1) et de son environnement (2), laquelle est dérivée des vues acquises par les plusieurs unités d'acquisition d'image (4-V, 4-R, 4-L, 4-H), et
en plus des unités d'acquisition d'image (4-V, 4-R, 4-L, 4-H), plusieurs détecteurs d'écart (7) pour détecter les écarts par rapport à des objets (3a - 3c) dans l'environnement (2) du véhicule automobile (1), **caractérisé en ce que**
pour chaque écart déterminé qui est inférieur à un écart de seuil, un élément rectiligne (34 - 39), par exemple un élément en secteur de cercle, est représenté graphiquement dans la vue de dessus (24), une distance graphique de l'élément rectiligne (34 - 39) correspondant d'un profil du véhicule automobile (1) correspondant à l'écart déterminé de l'objet (3a - 3c) déterminé par rapport au véhicule automobile (1) ou la distance graphique de l'élément rectiligne (34 - 39) du profil du véhicule automobile (1) correspondant à l'écart déterminé de l'objet (3a - 3c) correspondant par rapport au véhicule automobile (1) moins un écart de sécurité.

2. Système d'assistance au stationnement selon la revendication 1, **caractérisé en ce qu'**une longueur de l'élément rectiligne (34 - 39) évoque une étendue d'une plage de mesure du détecteur d'écart (7) correspondant.

3. Système d'assistance au stationnement selon l'une des revendications précédentes, **caractérisé en ce que** les éléments rectilignes (34 - 39) sont classifiés conformément à leurs écarts associés des objets correspondants (3a - 3c) par rapport au véhicule automobile (1) et la classification est indiquée au moyen d'un attribut de représentation, par exemple un type de ligne et/ou une couleur et/ou un mode de représentation.

4. Système d'assistance au stationnement selon l'une des revendications précédentes, **caractérisé en ce que** le dispositif d'affichage (6) est réalisé sous la forme d'un écran tactile et une vue supplémentaire (40) de l'une des plusieurs unités d'acquisition d'image (4-V, 4-R, 4-L, 4-H) est représentée en plus de la vue de dessus (24), une sélection de la vue supplémentaire (40) pouvant être effectuée en touchant la surface d'affichage (22) dans la zone de la représentation de l'environnement (2) en vue de dessus (24) et la vue de l'unité d'acquisition d'image (4-V, 4-R, 4-L, 4-H) sélectionnée en tant que vue supplémentaire est celle qui représente la partie (29-33) de l'environnement (2) dans laquelle se trouve la position du toucher dans la vue de dessus (24).

5. Système d'assistance au stationnement selon la revendication 4, **caractérisé en ce que** la partie (29) de l'environnement (2) dont la vue est représentée en plus en tant que vue supplémentaire (40) est mise en valeur graphiquement ou marquée dans la vue de dessus (24), par exemple par un encadrement ou par une mise en valeur des limites (25, 26) limitrophes entre les parties (29, 30, 32) de l'environnement (2).

6. Système d'assistance au stationnement selon la revendication 4 ou 5, **caractérisé en ce qu'**il est prévu au moins une zone supplémentaire dans la vue de dessus (24) à laquelle est associée une fonctionnalité supplémentaire, de sorte qu'en cas de toucher de l'au moins une zone supplémentaire dans la vue de dessus (24), une vue renvoyant à la fonctionnalité associée est représentée en tant que vue supplémentaire.

7. Système d'assistance au stationnement selon l'une des revendications 4 à 6, **caractérisé en ce que** la vue de dessus (24) et la vue supplémentaire (40) sont conçues sous la forme de fenêtres et une zone de glisser/déposer (61) est associée à au moins l'une des fenêtres et la fenêtre associée à la zone de glisser/déposer (61) peut être positionnée de manière active sur la surface d'affichage par un toucher de la surface d'affichage effectué dans la zone de glisser/déposer suivi d'un déplacement d'effleurement ou de tirage d'un élément d'actionnement sur la surface d'affichage, sans interrompre le toucher, le changement de position étant dépendant du mouvement de tirage.

8. Système d'assistance au stationnement selon la revendication 7, **caractérisé en ce que** la fenêtre qui n'est pas positionnée par le toucher de la zone de glisser/déposer (61) suivi du mouvement d'effleurement subit automatiquement un changement de position et/ou une adaptation de sa forme et/ou de sa taille après un repositionnement réussi de l'autre fenêtre, de sorte que les informations initialement représentées dans celle-ci restent toujours perceptibles et que la zone de la surface d'affichage qui était initialement occupée par la fenêtre repositionnée activement soit remplie.

9. Procédé d'exploitation d'un système d'assistance au stationnement pour un véhicule automobile (1) comprenant les étapes suivantes :
acquisition de plusieurs vues de l'environnement (2) du véhicule automobile (1) au moyen de plusieurs unités d'acquisition d'image (4-V, 4-R, 4-L, 4-H),
dérivation d'une vue de dessus (24) du véhicule automobile (1) et de son environnement (2) à partir des vues acquises par les plusieurs unités d'acquisition d'image (4-V, 4-R, 4-L, 4-H),
représentation de la vue de dessus (24) sur une unité d'affichage (6),
acquisition d'écarts par rapport à des objets (3a - 3c) dans l'environnement (2) du véhicule automobile (1) au moyen de plusieurs détecteurs d'écart (7) présents en plus des unités d'acquisition d'image (4-V, 4-R, 4-L, 4-H),
**caractérisé en ce que**
pour chaque écart déterminé qui est inférieur à un écart de seuil, un élément rectiligne (34 - 39), par exemple un élément en secteur de cercle, est représenté graphiquement dans la vue de dessus (24), une distance graphique de l'élément rectiligne (34 - 39) correspondant d'un profil du véhicule automobile (1) correspondant à l'écart déterminé de l'objet (3a - 3c) déterminé par rapport au véhicule automobile (1) ou la distance graphique de l'élément rectiligne (34 - 39) du profil du véhicule automobile (1) correspondant à l'écart déterminé de l'objet (3a - 3c) correspondant par rapport au véhicule automobile (1) moins un écart de sécurité.

10. Procédé selon la revendication 9, **caractérisé en ce qu'**une étendue d'une plage de mesure du détecteur d'écart (7) correspondant est à chaque fois évoquée par une longueur de l'élément rectiligne (34 - 39).

11. Procédé selon la revendication 9 ou 10, **caractérisé en ce que** les éléments rectilignes (34 - 39) sont classifiés conformément à leurs écarts associés des objets correspondants (3a - 3c) par rapport au véhicule automobile (1) et la classification est indiquée au moyen d'un attribut de représentation, par exemple un type de ligne et/ou une couleur et/ou un mode de représentation.

12. Procédé selon l'une des revendications 9 à 11, **caractérisé en ce qu'**une vue supplémentaire (40) de l'une des plusieurs unités d'acquisition d'image (4-V, 4-R, 4-L, 4-H) est représentée en plus de la vue de dessus (24), une sélection de la vue supplémentaire (40) pouvant être effectuée en touchant la surface d'affichage (22) dans la zone de la représentation de l'environnement (2) en vue de dessus (24) et une position de toucher d'un utilisateur étant détectée à cet effet et la position de toucher servant à déterminer la vue qui représente la partie de l'environnement (2) dans laquelle se trouve la position de toucher dans la vue de dessus (24), et cette vue étant utilisée comme vue supplémentaire (40).

13. Procédé selon la revendication 12, **caractérisé en ce que** les limites (25 - 28) entre les parties (29 - 32) de l'environnement (2) sont représentées graphiquement dans la vue de dessus (24).

14. Procédé selon la revendication 12 ou 13, **caractérisé en ce que** la partie de l'environnement (2) dont la vue est représentée en plus est mise en valeur graphiquement ou marquée dans la vue de dessus (24), par exemple par un encadrement ou par une mise en valeur des limites (25, 26) limitrophes entre les parties (29, 20, 32) de l'environnement (2).

15. Procédé selon l'une des revendications 12 à 14, **caractérisé en ce que** la vue de dessus (24) et la vue supplémentaire (40) sont conçues sous la forme de fenêtres et une zone de glisser/déposer (61) est associée à au moins l'une des fenêtres et la fenêtre associée à la zone de glisser/déposer (61) est positionnée de manière active sur la surface d'affichage par un toucher de la surface d'affichage effectué dans la zone de glisser/déposer suivi d'un déplacement d'effleurement ou de tirage d'un élément d'actionnement sur la surface d'affichage, sans interrompre le toucher, le changement de position étant effectué en fonction du mouvement de tirage.
